# EUROPÄISCHE PATENTSCHRIFT

(11) **EP 0 961 070 B1**
(45) Veröffentlichungstag und Bekanntmachung des Hinweises auf die Patenterteilung: **17.09.2003**
(21) Anmeldenummer: 99110359.9
(22) Anmeldetag: 28.05.1999
(51) Int. Cl.: F16L 37/084

(54) **Schnellkupplung**
Quick connector
Raccord rapide

(30) Priorität: 18.07.1998 DE 19832377; 29.05.1998 DE 19823982
(43) Veröffentlichungstag der Anmeldung: 01.12.1999
(73) Patentinhaber: GEIGER TECHNIK GmbH, D-82467 Garmisch-Partenkirchen (DE)
(72) Erfinder: Prosteder, Franz, 82418 Murnau (DE); Allinger, Andreas, 82496 Oberau (DE); Altenhofen, Peter, 82481 Mittenwald (DE); Lohse, Dr. Georg, 82237 Steinebach (DE)
(74) Vertreter: Flosdorff, Jürgen, Dr.

(56) Entgegenhaltungen:
- EP-A- 0 319 746
- DE-A- 19 644 337
- US-A- 5 318 332
- US-A- 5 586 791
- US-A- 5 609 370

## Beschreibung

Die Erfindung betrifft eine Schnellkupplung für zwei Schläuche oder andere medienführende Baugruppen, die zwei ineinander steckbare Schlauchstutzen hat, von denen einer oder beide auch ein fester Bestandteil von einer (oder zwei) medienführenden Baugruppen sein kann/können, wobei in der Einstecköffnung des im Kopplungszustand äußeren Schlauchstutzens ein O-Ring angeordnet ist, der an einer Ringschulter dieses Schlauchstutzens anliegt, und wobei Befestigungsmittel vorgesehen sind, die in der Kopplungsposition den inneren Schlauchstutzen lösbar fixieren.

Der an der Innenseite des äußeren Schlauchstutzens oder Mutter-Schlauchstutzens angeordnete O-Ring dient zur gegenseitigen Abdichtung der beiden Schlauchstutzen in der Kopplungsposition. Damit dieser an einer Ringschulter des äußeren Schlauchstutzens anliegende O-Ring beim Lösen der Verbindung nicht aus dem äußeren Schlauchstutzen herausgezogen wird, wird meist ein Stützring eingebracht, der in den äußeren Schlauchstutzen z.B. eingeschweißt wird. Dieser Stützring begrenzt das Bett des O-Rings. Der Stützring kann auch eingeclipst werden, was ebenfalls mit einem nicht unbeträchtlichen Aufwand verbunden ist.

Die EP 0 319 746 A offenbart eine Schnellkupplung, bei der entweder ein Kupplungsstück drehbar auf dem äußeren Schlauchstutzen sitzt oder die Winkellage festgelegt ist, indem entweder zwischen dem äußeren Schlauchstutzen und dem Kupplungsstück eine Schweißverbindung ausgebildet oder eine Schraubverbindung zwischen diesen beiden Bauteilen verklebt ist. Diese Arten der nicht-drehbaren Befestigung des Kupplungsstücks auf dem äußeren Schlauchstutzen sind mit einem ziemlich großen Aufwand verbunden und ermöglichen es nicht, eine einmal festgelegte Winkellage bei Bedarf zu ändern.

Die US-A-5,586,791 offenbart eine Schnellkupplung mit einer Verzahnung zur Festlegung der Winkellage, wobei diese Verzahnung zwischen dem Kupplungsring und dem inneren Schlauchstutzen vorgesehen ist. Hierzu sind am Umfang des inneren Schlauchstutzens Zähne angeformt, die in Zwischenräume zwischen Zähne des Kupplungsrings eingreifen. Der Kupplungsring und der innere Schlauchstutzen werden unter Eingriff der Verzahnung zusammengesetzt, bevor dann die beiden Schlauchstutzen ineinandergesteckt werden. Hierbei ist es ziemlich aufwändig, eine einmal eingestellte Winkellage zu verändern.

Der vorliegenden Erfindung liegt die Aufgabe zugrunde, eine Schnellkupplung der betrachteten Art so zu verbessern, daß der oben angesprochen Nachteil vermieden ist.

Diese Aufgabe wird erfindungsgemäß durch die Merkmale des Patentanspruchs 1 gelöst.

Vorteilhafte Ausgestaltungen der Erfindung ergeben sich aus den Unteransprüchen.

Das Kupplungsstück ist nicht-drehbar auf dem äußeren Schlauchstutzen befestigt, wobei diese nicht-drehbare Befestigung in einer ausgewählten Winkellage erfolgen kann. Das Kupplungsstück und der äußere Schlauchstutzen greifen mit Verzahnungen ineinander ein, wobei an der Stirnkante des äußeren Schlauchstutzens eine Verzahnung ausgebildet ist, die im Kopplungszustand in eine entsprechende Verzahnung des Kupplungsstücks eingreift. Dabei können z.B. 45 Zähne ausgebildet sein, so daß alle 8° eine Verrastung erfolgen kann.

Wie bereits oben erwähnt, können die Befestigungsmittel des Kupplungsstücks und des inneren Schlauchstutzens oder Veter-Schleuchstutzens (nachfolgend durchgehend als "innerer Schlauchstutzen" bezeichnet), einen Bajonettverschluß bilden. Hierzu können zwei radiale Vorsprünge an dem Schlauchstutzen ausgebildet sein, die in axial verlaufende Innennuten des Kupplungsstücks einschiebbar sind, bis die Kopplungsposition erreicht ist. In dieser Position sind die Vorsprünge in Fenster eingetreten, die über einen Umfangsbereich aus dem Kupplungsstück ausgeschnitten sind. Durch Drehen des inneren Schlauchstutzens geraten die Vorsprünge hinter die Randkanten der Fenster, wodurch der innere Schlauchstutzen in axialer Richtung sicher befestigt ist.

Nach einem alternativen Vorschlag der Erfindung enthält das Kupplungsstück freigeschnittene Zungen, die in der Kopplungsposition hinter einer ringförmigen Schulter des inneren Schlauchstutzens einrasten. Die Zungen haben an ihren freien Enden Griffstücke, die radial einwärts gedrückt werden, um die Verrastung zu lösen. Dabei stützen sich die Zungen wie Wippen auf einem in axialer Richtung konvex verlaufenden Abschnitt des inneren Schlauchstutzens ab, wodurch die freigeschnittenen Zungen an ihren von den Griffabschnitten abgewandten Endbereichen radial nach außen bewegt werden, so daß der innere Schlauchstutzen freigegeben ist. Wenn die Griffabschnitte der Zungen losgelassen werden, federn diese in ihre ursprüngliche Lage zurück.

Es liegt im Rahmen der Erfindung, geeignete andere Befestigungsmittel zur lösbaren Fixierung des inneren Schlauchstutzens anzuordnen, wie z.B. einen Metallbügel, der mit zwei Schenkeln ins Innere des Kupplungsstücks ragt und beim Einsetzen des inneren Schlauchstutzens-nach außen gedrückt wird, um in der Kopplungsposition der beiden Schlauchstutzen in eine Ringnut des inneren Schlauchstutzens einzuschnappen.

Die drei Bestandteile der Schnellkupplung bestehen zweckmäßigerweise aus Kunststoff, wobei Polyamid mit Glasfaserverstärkung besonders bevorzugt ist. Die Erfindung ist aber nicht auf die Verwendung dieses Materials beschränkt.

Weitere Einzelheiten ergeben sich aus der nachfolgenden Beschreibung sowie anhand der Zeichnung. Dabei zeigen:
- Fig. 1: einen Längsschnitt durch eine erste Ausführungsform nach dem Stand der Technik;
- Fig. 2: und 3 Seitenansichten der Schnellkupplung gemäß Fig. 1;
- Fig. 4: einen Querschnitt durch die Schnellkupplung gemäß Fig. 2 entlang der Linie C-C;
- Fig. 5: einen Längsschnitt durch eine zweite Ausführungsform nach dem Stand der Technik;
- Fig. 6 und 7: Seitenansichten der Schnellkupplung gemäß Fig. 5;
- Fig. 8: einen Schnitt entlang der Linie B-B in Fig. 7;
- Fig. 9: eine erfindungsgemäße Ausführungsform der Schnellkupplung vor der Koppelung des äußeren Schlauchstutzens mit dem Kupplungsstück;
- Fig. 10A-10D: verschiedene perspektivische Ansichten des Kopplungszustandes der Schnellkupplung gemäßFig. 9;
- Fig. 11: einen Schnitt entlang der Linie B-B in Fig. 10Dvor der Kopplung des Schlauchstutzens mit dem Kupplungsstück;
- Fig. 12: den Kopplungszustand der Anordnung gemäß Fig. 11 und
- Fig. 13: einen Schnitt durch die Anordnung gemäß Fig. 10D entlang der Linie A-A.

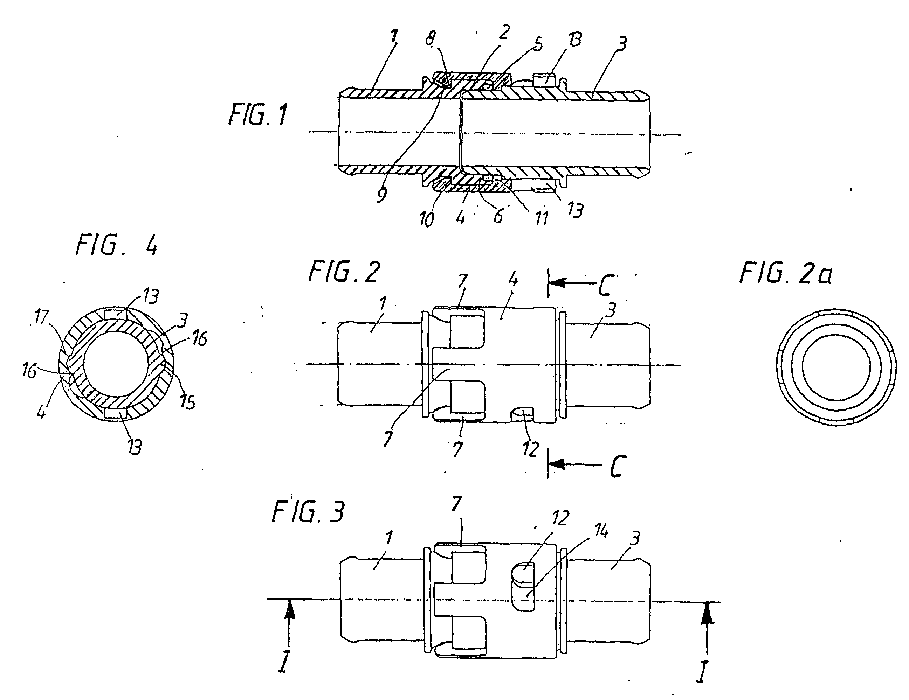

Mit Bezug auf die Figuren 1 bis 4 besteht die Schnellkupplung aus einem Schlauchstutzen 1 mit einer Einstecköffnung 2 für einen zweiten Schlauchstutzen 3 sowie aus einem Kupplungsstück 4. Die Einstecköffnung 2 hat einen Radius, der um die Wandstärke des eingreifenden, inneren Schlauchstutzens 3 größer ist als der Innenradius des übrigen Schlauchstutzens 1 sowie des Schlauchstutzens 3.

Ein O-Ring 5 sitzt in einer ringförmigen Aussparung am Ende des Schlauchstutzens 1 und liegt an einer Ringschulter 6 an.

Das Kupplungsstück 4 hat vier in Umfangsrichtung gleichmäßig voneinander beabstandete Federarme 7, an deren freien Enden hakenförmige Vorsprünge 8 radial nach innen vorstehen. In der in den Figuren 1 bis 3 dargestellten Befestigungslage greifen die hakenförmige Vorsprünge 8 in eine Ringnut 9 des Schlauchstutzens 1 ein und hintergreifen dabei eine Ringschulter 10 des Schlauchstutzens 1, wodurch das Kupplungsstück 4 in axialer Richtung auf dem Schlauchstutzen 1 fixiert ist.

Das Kupplungsstück 4 hat ferner einen radial nach innen ragenden Ringvorsprung 11, der an der Stirnkante des Schlauchstutzens 1 sowie an dem O-Ring anliegt, so daß der O-Ring 5 zwischen der Ringschulter 6 und dem ringförmigen Vorsprung 11 sicher gehalten ist, wenn der Schlauchstutzen 3 aus dem Schlauchstutzen 1 herausgezogen wird.

Der inneren Schlauchstutzen 3 enthält zwei um 180° in Umfangsrichtung voneinander beabstandete, nach außen weisende Vorsprünge 12, die Bestandteil eines Bajonettverschlusses sind. Die Vorsprünge 12 bewegen sich beim Einsetzen des Schlauchstutzens 3 zunächst in axialer Richtugn in inneren Nuten 13 des Kupplungsstücks 4 und geraten in der Kopplungsposition in den Bereich von Fenstern 14, die sich über einen Umfangsbereich erstreckend aus der Wand des Kupplungsstücks 4 ausgeschnitten sind. Der innere Schlauchstutzen 3 wird nach Eintritt der Vorsprünge 12 in den Bereich der Fenster 14 in Umfangsrichtung gedreht, wobei zwei weitere Vorsprünge 15 des inneren Schlauchstutzens 3 beim Drehen in Umfangsrichtung über Rampen 16 in der Innenwand des Kupplungsstücks 4 in Vertiefungen 17 eintreten. Hierdurch ist die Winkellage des inneren Rohrstutzens 3 mit einer lösbaren Verrastung fixiert.

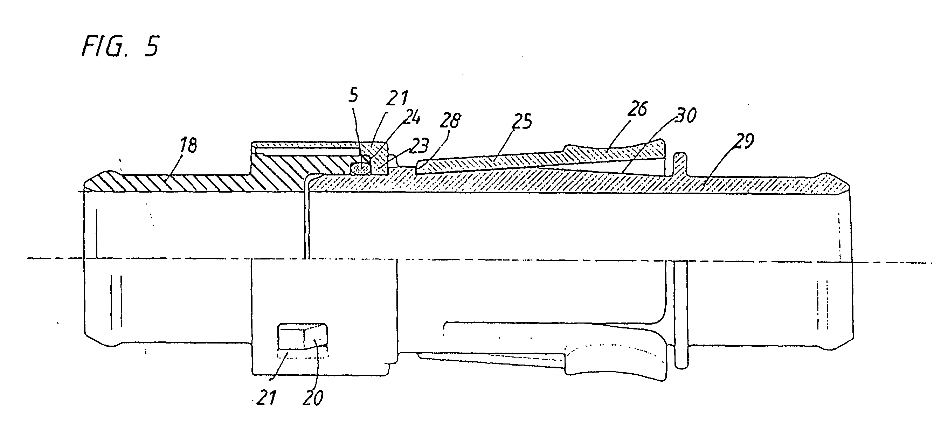

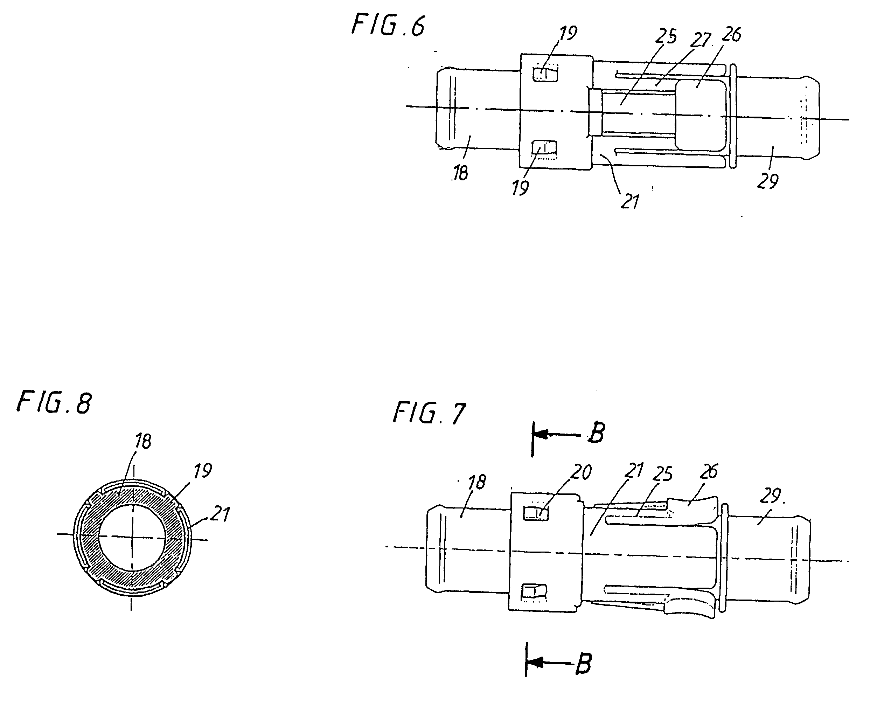

Bei der in den Figuren 5 bis 8 dargestellten zweiten Ausführungsform der Schnellkupplung sind an dem äußeren Schlauchstutzen 18 vier in Umfangsrichtung gleichmäßig voneinander beabstandete radiale Vorsprünge 19 angeformt. Diese Vorsprünge 19 haben schräge Rampen 20, über die das Kupplungsstück 21 unter geringfügiger radialer Aufweitung gleitet, bis in der Befestigungslage die Vorsprünge 20 in Fenster 22 einrasten, die aus dem Kupplungsstück 21 ausgeschnitten sind. Hierdurch ist das Kupplungsstück praktisch unlösbar an dem Schlauchstutzen 18 befestigt. Wie bei der oben beschriebenen Ausführungsform hat auch das Kupplungsstück 21 einen nach innen weisenden Ringvorsprung 23, der das Bett 24 des O-Rings 5 in axialer Richtung begrenzt.

Das Kupplungsstück 21 hat zwei in Umfangsrichtung einander gegenüberliegend angeordnete freigeschnittene Zungen 25, die an ihrem in Einschubrichtung rückwärtigen Endabschnitt über Griffstücke 26 mit Stegen 27 verbunden sind, die wiederum in axialer Richtung von den übrigen Umfangsbereichen des Kupplungsstücks 21 freigeschnitten sind.

Die Zungen 25 verlaufen zu ihrem freien Ende hin in einem spitzen Winkel radial einwärts, wie Fig. 5 zeigt.

In der Befestigungslage greifen die vorderen Randkanten der Zungen 25 hinter eine Ringschulter 28 des inneren Rohrstutzens 29.

Die Zungen 25 liegen in der Befestigungslage über einen Teil ihrer Länge am Außenumfang des inneren Schlauchstutzens 29 an, wie Fig. 5 zeigt. Die Umfangswand des äußeren Schlauchstutzens 29 ist im Bereich der freigeschnittenen Zungen -im Längsschnitt betrachtet- leicht konvex geformt, so daß etwa die rückwärtige Hälfte der freigeschnittenen Zungen 25 mit dem Griffabschnitt 26 radial von der Umfangswand 30 dieses Bereichs beabstandet ist. Wenn die beiden Griffabschnitte 26 radial einwärts gedrückt werden, bewegen sich die freigeschnittenen Zungen 25 nach Art einer Wippe auf dem konvexen Umfangsabschnitt des inneren Schlauchstutzens 29, so daß der vordere Abschnitt der freigeschnittenen Zungen 25 radial nach außen bewegt wird und die Ringschulter 28 des inneren Schlauchstutzens 29 nicht mehr von der vorderen Randkante der freigeschnittenen Zungen 25 hintergriffen wird. Damit kann der innere Schlauchstutzen 29 aus dem äußeren Stutzen 18 und aus dem Kupplungsstück 21 herausgezogen werden.

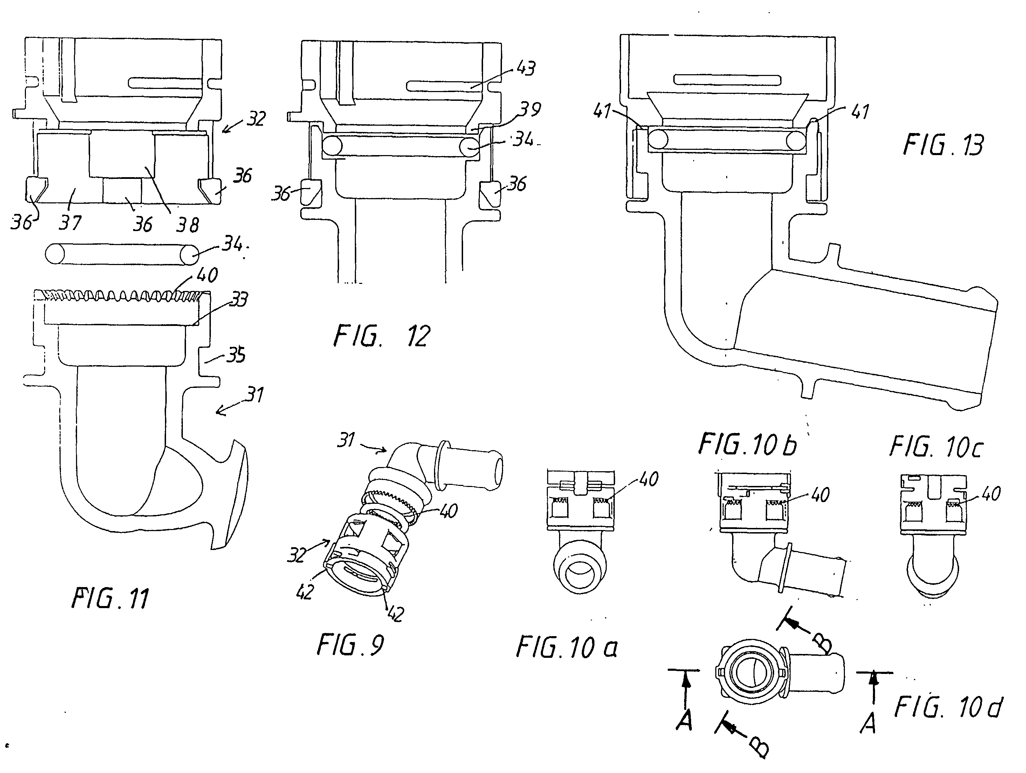

Die Figuren 9 bis 13 zeigen eine erfindungsgemäße Ausführungsform der Schnellkupplung, wobei jeweils nur der äußere Schlauchstutzen 31 und das Kupplungsstück 32 dargestellt sind. Der innere Schlauchstutzen, der ähnlich der Darstellung in Fig. 1 in das Kupplungsstück und den äußeren Schlauchstutzen eingeführt und mittels einer geeigneten Befestigungsvorrichtung verriegelt wird, ist in den Figuren weggelassen.

Der äußere Schlauchstutzen 31 hat -wie dies auch bei den übrigen Ausführungsformen der Fall ist- eine innere Ringschulter 33, an der sich ein O-Ring 34 abstützt. An der Außenseite hat der äußere Schlauchstutzen 31 eine umlaufende Ringnut 35, in die im Kopplungszustand vier hakenförmige Vorsprünge 36 einrasten, die an der Innenseite eines vorderen Ringabschnitts 37 des Kupplungsstücks 32 angeformt sind. Der vordere Ringabschnitt 37 ist dadurch ausgebildet, daß aus der Wand des Kupplungsstücks 32 an mit den hakenförmigen Vorsprüngen 36 übereinstimmenden Stellen Fenster 38 weggeschnitten sind, die eine größere Breite als die hakenförmigen Vorsprünge 36 haben.

Wenn das Kupplungsstück 32 auf den äußeren Schlauchstutzen 31 aufgeschoben wird, weitet sich der vordere Ringabschnitt 37 des Kupplungsstücks 32 etwas radial auf, bis die hakenförmigen Vorsprünge 36 in die Ringnut 35 einschnappen.

Das Kupplungsstück 32 hat ferner einen Ringabschnitt 39, der im Kupplungszustand der Ringschulter 33 des äußeren Schlauchstutzens 31 im Abstand gegenüberliegt und den O-Ring 34 von der anderen Seite abstützt.

An der vorderen Stirnkante des äußeren Schlauchstutzens 31 ist eine Verzahnung 40 ausgebildet, die beispielsweise aus 45 Zähnen besteht. Im Kopplungszustand greift die Verzahnung 40 in eine entsprechende Verzahnung 41 des Kupplungsstücks 32 ein, wobei diese Verzahnung 41 sich nicht durchgehend über den gesamten Umfang erstreckt, sondern nur in den Bereichen zwischen den Fenstern 38.

Im Kopplungszustand sind damit der äußere Schlauchstutzen 31 und das Kupplungsstück 32 verdrehsicher miteinander verrastet, wobei diese Verrastung in einer ausgewählten kleinen Winkelteilung von beispielsweise 8° erfolgen kann, ohne daß die Erfindung hierauf beschränkt ist.

Wie die Figuren 9 und 10D erkennen lassen, enthält das Kupplungsstück 32 zwei diametral gegenüberliegende, in axialer Richtung verlaufende Innennuten 42, in die beim Einsetzen des (nicht dargestellten) inneren Schlauchstutzens zwei entsprechende Vorsprünge an dessen Außenseiten eingreifen. Hierdurch ist der innere Schlauchstutzen verdrehsicher in dem Kupplungsstück und in dem äußeren Schlauchstutzen befestigt. Durch Eingriff der Verzahnungen 40 und 41 des äußeren Schlauchstutzens 31 und des Kupplungsstücks 32 werden somit die beiden Schlauchstutzen verdrehsicher in der ausgewählten Winkellage miteinander gekoppelt.

Das Kupplungsstück 32 enthält zwei einander gegenüberliegende Schlitze 43, durch die ein nicht dargestellter Metallbügel mit zwei Schenkeln ins Innere des Kupplungsstücks 32 ragt. Beim Einsetzen des inneren Schlauchstutzens werden diese Schenkel elastisch nach außen gedrückt, um in der Kupplungsposition der beiden Schlauchstutzen in eine Ringnut des inneren Schlauchstutzens einzuschnappen.

Es wird betont, daß auch bei der erfindungsgemäßen Ausführungsform der innere Schlauchstutzen beispielsweise mittels eines Bajonettverschlusses oder mittels freigeschnittener Zungen des Kopplungsstücks befestigt werden kann, wie dies oben im Zusammenhang mit den beiden anderen Ausführungsformen beschrieben ist.

## Patentansprüche

1. Schnellkupplung für zwei Schläuche oder andere medienführende Baugruppen, mit zwei ineinandersteckbaren Schlauchstutzen (31,3), wobei in der Einstecköffnung des äußeren Schlauchstutzens (31) ein O-Ring (5) angeordnet ist, der an einer Ringschulter (6) dieses Schlauchstutzens (31) anliegt, und ein Kupplungsstück (32) in axialer Richtung unbeweglich auf dem äußeren Schlauchstutzen (31) befestigt ist, das mit einem nach innen ragenden Ringvorsprung (11,23) an dem O-Ring (5) anliegt, so daß dieser zwischen der Ringschulter (6) und dem Ringvorsprung (11,23) gehalten ist, wobei der innere Schlauchstutzen (3,29) und das Kupplungsstück (32) zusammenwirkende Befestigungsmittel aufweisen, die in der Kopplungsposition den inneren Schlauchstutzen (3,29) lösbar fixieren,
**dadurch gekennzeichnet,,**
**daß** an der Stirnkante des äußeren Schlauchstutzens (31) eine Verzahnung (40) ausgebildet ist, die im Kopplungszustand in eine entsprechende Verzahnung (41) des Kupplungsstücks (32) eingreift.

2. Schnellkupplung nach Anspruch 1,
**dadurch gekennzeichnet,**
**daß** an dem Kupplungsstück (32) nach innen ragende hakenförmige Vorsprünge (8) angeformt sind, die in eine Ringnut (9) des äußeren Schlauchstutzens (1) einrasten.

3. Schnellkupplung nach Anspruch 2,
**dadurch gekennzeichnet,**
**daß** die hakenförmigen Vorsprünge (8) an Federarmen (7) angeformt sind.

4. Schnellkupplung nach Anspruch 2,
**dadurch gekennzeichnet,**
**daß** die hakenförmigen Vorsprünge (8) an einem vorderen Ringabschnitt (37) angeformt sind.

5. Schnellkupplung nach Anspruch 1,
**dadurch gekennzeichnet,**
**daß** die Verzahnung (40) aus 45 Zähnen besteht.

6. Schnellkupplung nach einem der Ansprüche 1 bis 5,
**dadurch gekennzeichnet,**
**daß** die Befestigungsmittel (12,13,14) einen Bajonettverschluß bilden.

7. Schnellkupplung nach einem der Ansprüche 1 bis 5,
**dadurch gekennzeichnet,**
**daß** das Kupplungsstück (32) freigeschnittene Zungen (25) aufweist, die in der Kopplungsposition hinter einer ringförmigen Schulter (28) des inneren Schlauchstutzens (29) einrasten.

8. Schnellkupplung nach einem der Ansprüche 1 bis 5,
**dadurch gekennzeichnet,**
**daß** ein Metallbügel mit zwei Schenkeln ins Innere des Kupplungsstücks (32) ragt, die in eine Ringnut des inneren Schlauchstutzens eingreifen.

## Claims

1. A quick coupling for two hoses or other media-conducting components including two hose connectors (31, 3), which may be inserted into one another, an O-ring (5) being arranged in the insertion opening of the outer hose connector (31), which engages an annular shoulder (6) on this hose connector (31), and a coupling member (32) being secured axially immovably to the outer hose connector (31), which engages an inwardly extending annular projection (11, 23) on the O-ring (5), so that the latter is held between the annular shoulder (6) and the annular projection (11, 23), the inner hose connector (3, 29) and the coupling member (32) having cooperating fastening means, which releasably fix the inner hose connector (3, 29) in the coupled position, **characterised in that** formed on the end edge of the outer hose connector (31) there is an array of teeth (40) which, in the coupled state, engages with a corresponding array of teeth (41) on the coupling member (32).

2. A quick coupling as claimed in Claim 1, **characterised in that** formed on the coupling member (32) are inwardly extending, hook-shaped projections (8), which engage in an annular groove (9) in the outer hose connector (1).

3. A quick coupling as claimed in Claim 2, **characterised in that** the hook-shaped projections (8) are formed on spring arms (7).

4. A quick coupling as claimed in Claim 2, **characterised in that** the hook-shaped projections (8) are formed on a front annular section (37).

5. A quick coupling as claimed in Claim 1, **characterised in that** the array of teeth (4) comprises 45 teeth.

6. A quick coupling as claimed in one of Claims 1 to 5, **characterised in that** the fastening means (12, 13, 14) constitute a bayonet connector.

7. A quick coupling as claimed in one of Claims 1 to 5, **characterised in that** the coupling member (32) has tongues (25), which are cut free and which, in the coupled position, engage behind an annular shoulder (28) on the inner hose connector (29).

8. A quick coupling as claimed in one of Claims 1 to 5, **characterised in that** two limbs of a metal bracket extend into the interior of the coupling member and engage in an annular groove in the inner hose connector.

## Revendications

1. Raccord rapide pour deux tuyaux ou autres éléments de construction conducteurs de fluide, avec deux tubulures (31, 3) aptes à être emboîtées l'une dans l'autre, où dans l'ouverture d'insertion de la tubulure extérieure (31) est disposé un joint torique (5) qui s'applique à un épaulement annulaire (6) de cette tubulure (31), et une pièce d'accouplement (32) est fixée dans la direction axiale d'une manière non déplaçable sur la tubulure extérieure (31), qui s'applique par une saillie annulaire (11, 23) faisant saillie vers l'intérieur au joint torique (5) de sorte que celui-ci est retenu entre l'épaulement annulaire (6) et la saillie annulaire (11, 23), où la tubulaire intérieure (3, 29) et la pièce d'accouplement (32) présentent des moyens de fixation coopérants qui, dans la position accouplée, fixent relâchablement la tubulure intérieure (3, 29), **caractérisé en ce qu'**il est réalisé à l'arête frontale de la tubulure extérieure (31) une denture (40) qui, à l'état d'accouplement, vient en prise avec une denture correspondante (41) de la pièce d'accouplement (32).

2. Raccord rapide selon la revendication 1, **caractérisé en ce que** sont rapportées par formage à la pièce d'accouplement (32) des saillies en forme de crochet (8) faisant saillie vers l'intérieur qui s'enclenchent dans une rainure annulaire (9) de la tubulure extérieure (1).

3. Raccord rapide selon la revendication 2, **caractérisé en ce que** les saillies en forme de crochet (8) sont rapportées par formage à des bras élastiques (7).

4. Raccord rapide selon la revendication 2, **caractérisé en ce que** les saillies en forme de crochet (8) sont rapportées par formage à un tronçon annulaire avant (37).

5. Raccord rapide selon la revendication 1, **caractérisé en ce que** la denture (40) est constituée de 45 dents.

6. Raccord rapide selon l'une des revendications 1 à 5, **caractérisé en ce que** les moyens de fixation (12, 13, 14) forment une fermeture à baïonnette.

7. Raccord rapide selon l'une des revendications 1 à 5, **caractérisé en ce que** la pièce d'accouplement (32) présente des languettes découpées (25) qui, dans la position d'accouplement, s'enclenchent derrière un épaulement annulaire (28) de la tubulure intérieure (29).

8. Raccord rapide selon l'une des revendications 1 à 5, **caractérisé en ce qu'**un étrier métallique avec deux branches fait saillie dans l'intérieur de la pièce d'accouplement (32), qui s'engagent dans une rainure annulaire de la tubulure intérieure.
